# FASCICULE DE BREVET EUROPEEN

(11) **EP 2 746 977 B1**
(45) Date de publication et mention de la délivrance du brevet: **26.02.2020**
(21) Numéro de dépôt: 13198553.3
(22) Date de dépôt: 19.12.2013
(51) Int. Cl.: G06F 8/71

(54) **Procédé de génération d'une version d'un modele de supervision d'un système d'information**
Verfahren zur Erzeugung einer Überwachungsmodellversion eines Informationssystems
Method for generating a version of a model for supervising an information system

(30) Priorité: 21.12.2012 FR 1262625
(43) Date de publication de la demande: 25.06.2014
(73) Titulaire: Cassidian CyberSecurity SAS, 78990 Elancourt (FR)
(72) Inventeur: Rossigneux, Valérian, 78180 MONTIGNY LE BRETONNEUX (FR); Ponchel, Christophe, 78190 TRAPPES (FR); Boeuf, Jean-François, 92210 SAINT CLOUD (FR)
(74) Mandataire: Lebkiri, Alexandre

(56) Documents cités:
- PETKO BAKALOV ET AL: "Editing and versioning for high performance network models in a multiuser environment", GEOINFORMATICA ; AN INTERNATIONAL JOURNAL ON ADVANCES OF COMPUTER SCIENCE FOR GEOGRAPHIC INFORMATION SYSTEMS, KLUWER ACADEMIC PUBLISHERS, BO, vol. 15, no. 4, 16 avril 2011 (2011-04-16) , pages 769-803, XP019955663, ISSN: 1573-7624, DOI: 10.1007/S10707-011-0126-7
- PRESUHN BMC SOFTWARE R ET AL: "Applying WebDAV (Web Distributed Authoring and Versioning) to Network Configuration Management Problems <draft-presuhn-nmwebdav-01.txt>; draft-presuhn-nmwebdav-01.txt", 20021230, no. 1, 30 décembre 2002 (2002-12-30), XP015004896, ISSN: 0000-0004

## Description

### DOMAINE

La présente invention se rapporte au domaine technique des modèles de supervision de systèmes d'information, notamment des modèles décrivant les composants d'un réseau, les règles de sécurité appliquées au réseau ainsi que leurs révisions. En particulier, la présente invention se rapporte au domaine de l'édition et de la mise en production d'une nouvelle version d'un tel modèle de supervision. Le domaine de l'invention concerne également les procédés de mise en production sur le réseau d'un tel modèle et de la duplication d'un tel modèle.

### ETAT DE L'ART

Actuellement, il existe pour certains réseaux de communication des solutions permettant de superviser les équipements et les règles de sécurité. Ces solutions sont complexes et leur gestion nécessite la définition d'un grand nombre d'équipements, de configurations, d'architectures réseaux, et de règles de fonctionnement. Pour faciliter la gestion de l'exploitation des réseaux, il est connu de définir des modèles. L'utilisation des modèles permet notamment de conserver une homogénéité lorsqu'un nouveau réseau ou un sous-réseau est défini. Les modèles sont très fréquemment utilisés lorsque des réseaux sont déployés sur différents sites, puisque la définition d'un modèle d'un réseau sur un site permet de définir un modèle comportant la même base que le précédent sur un autre site.

Il existe des solutions permettant de modifier et mettre à jour ces modèles et de limiter les pertes d'informations d'un modèle à l'autre notamment lorsqu'une nouvelle version d'un modèle est envisagée. Une nouvelle version d'un modèle est destinée à remplacer une version précédente du modèle en cours d'exploitation. Une problématique importante est de permettre le basculement d'un modèle à un autre tout en conservant une qualité de service et en garantissant une continuité de fonctionnement.

Un inconvénient des solutions existantes est qu'elles ne permettent pas de s'affranchir d'erreurs, notamment dans la traçabilité des composants du réseau. La gestion de la définition des éléments du réseau des solutions existantes n'est pas conçue pour sécuriser le traitement de l'information notamment lors du remplacement d'une ancienne version d'un modèle d'un réseau par une nouvelle version de ce modèle.

Les solutions de l'art antérieur ne permettent qu'une seule représentativité des modèles de supervision ce qui contraint un superviseur d'un réseau à avoir une gestion extrêmement rigoureuse des basculements en exploitation des modèles ou de leur version. En effet, une erreur dans une nouvelle version d'un modèle peut conduire à des pertes de données lors de la mise en exploitation de cette dernière version qui peut impacter de nombreux utilisateurs.

Un inconvénient majeur résulte du fait qu'il n'existe pas de système suffisamment fiable et permettant de représenter différentes branches d'un modèle lorsque ce dernier évolue.

Un autre inconvénient est qu'un modèle ne peut prendre en compte les évolutions d'un réseau lorsque ces derniers sont amenés à évoluer selon des modes de fonctionnements particuliers. En effet, un réseau peut changer au cours du temps, notamment en ce qui concerne les équipements qui le composent mais aussi selon les règles de sécurité appliquées aux différents équipements et aux utilisateurs. Ces dernières peuvent être modifiées, par exemple, selon des plages horaires. La représentation de la sécurité est alors différente selon un critère d'heure. Actuellement, aucun modèle ne permet la prise en compte de configurations dépendantes, par exemples, des plages horaires.

Dans ce cas, les modèles actuels doivent être mis à jour selon des procédures qui nécessitent de nombreuses mesures de sauvegardes pour pallier de potentielles erreurs lors d'un déploiement de la mise à jour.

Un autre point important concerne la valeur d'un équipement donné selon un contexte opérationnel. A titre d'exemple, un contexte opérationnel peut être défini par la criticité d'un centre relié au réseau modélisé dans un modèle par rapport à un autre centre sensiblement identique mais ayant un niveau critique moins important. Dans ce dernier cas, on considère un « centre » comme par exemple un site industriel, une ville, une école ou tout réseau local pouvant être relié à un backbone.

La période peut également influer sur le contexte opérationnel. Le réseau peut être menacé de différentes manières et les menaces peuvent évoluer au cours du temps, ce qui justifie de considérer éventuellement de nouveaux éléments susceptibles d'être compromis par une attaque.

Un des principaux problèmes des solutions actuelles est qu'elles n'offrent pas de représentativité multiples d'un réseau et des possibles évolutions qui peuvent être intégrées dans différentes représentation d'une même réalité.

Le document DOI : 10.1007/S10707-011-0126-7 intitulé « Editing and versioning for high performance network models in a multiuser environment », Petko BAKALOV et al., Geoinformatica, du 16 avril 2011 est connu de l'état de la technique.

### RESUME DE L'INVENTION

L'invention permet de résoudre les inconvénients précités.

L'invention permet de gérer plusieurs représentations de la surveillance d'un même système et de choisir laquelle exploiter à un instant donné, pour cela des modèles d'un réseau sont définis. Chaque modèle définit des composants du système à surveiller et les règles d'évaluation de la sécurité. Ces deux types d'informations peuvent varier d'un modèle à l'autre. L'invention permet de générer différentes instances d'un même modèle et de les identifier afin de n'autoriser l'exploitation que d'une seule simultanément.

De plus, l'invention permet de définir les procédés de modifications d'une version d'un modèle, les procédés de génération de nouvelles branches permettant de définir d'autres modèles d'un réseau ainsi que les procédés de duplication d'un modèle.

Une particularité de l'invention est de permettre le passage d'un modèle du réseau à un autre modèle tout en conservant les informations de sécurité telles que les valeurs des résultats des calculs faits lors de la supervision avec une version antérieure du modèle.

L'objet de l'invention concerne un dispositif de supervision selon la revendication 1 et un système correspondant selon la revendication 10. Des modes de réalisations préférés sont décrits par les revendications dépendantes.

### BREVE DESCRIPTION DES FIGURES

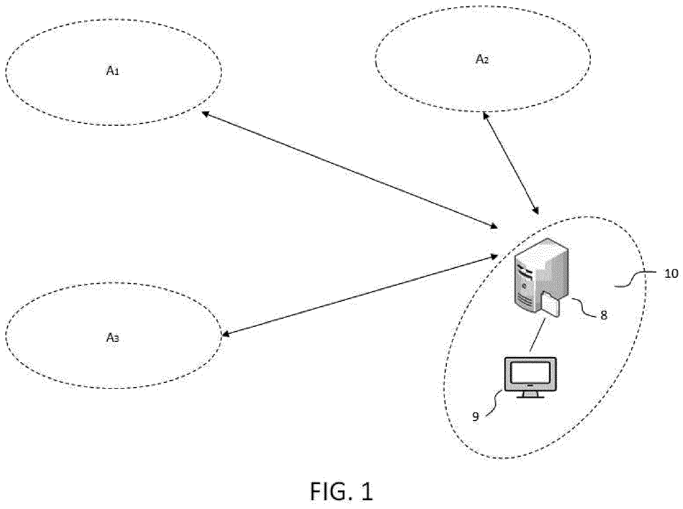

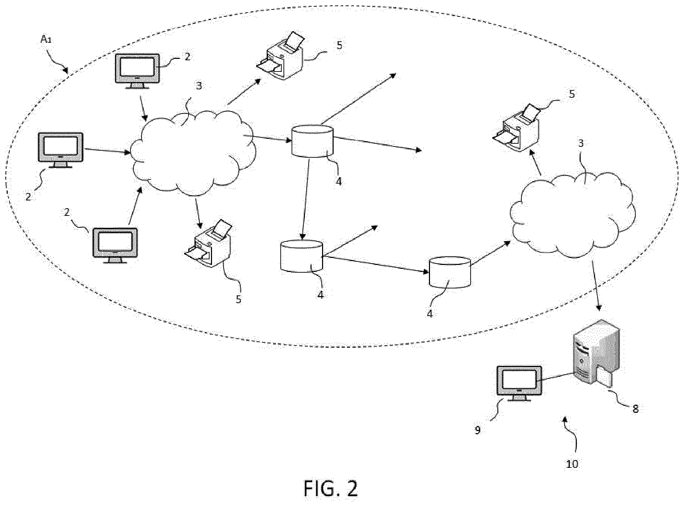

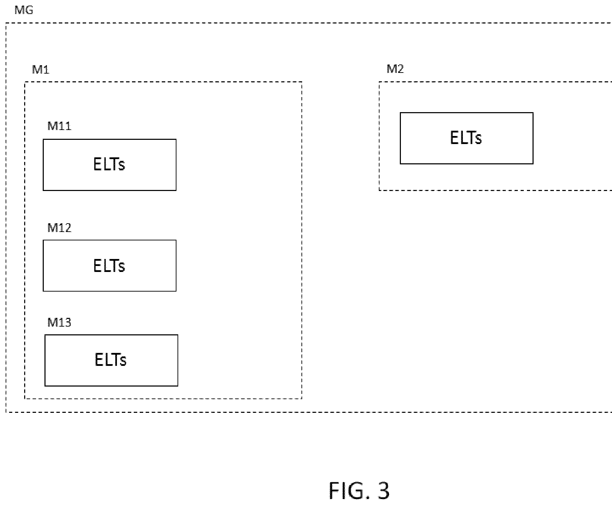

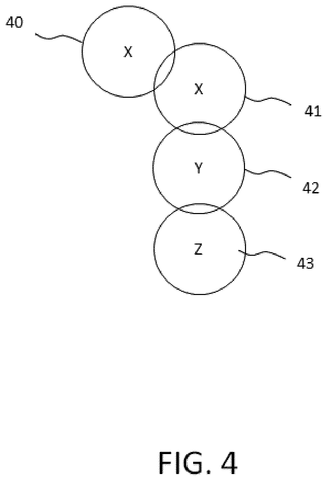

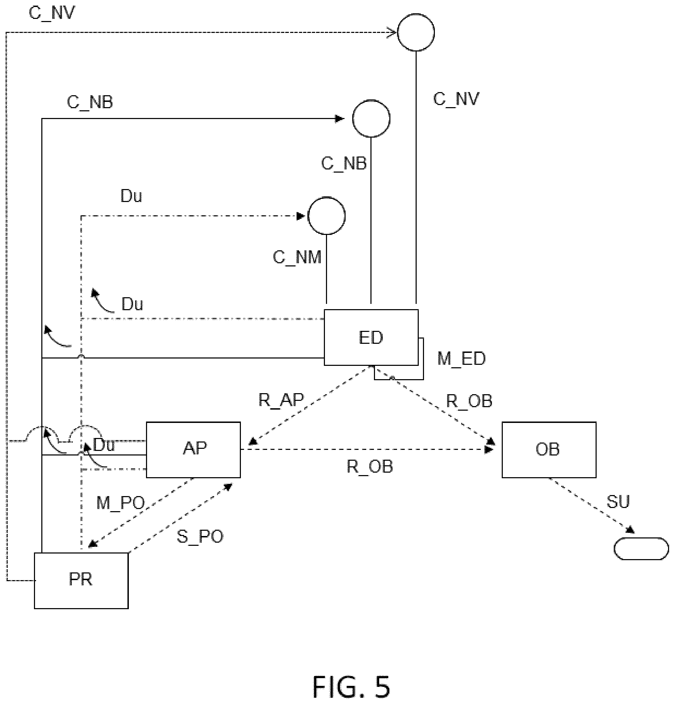

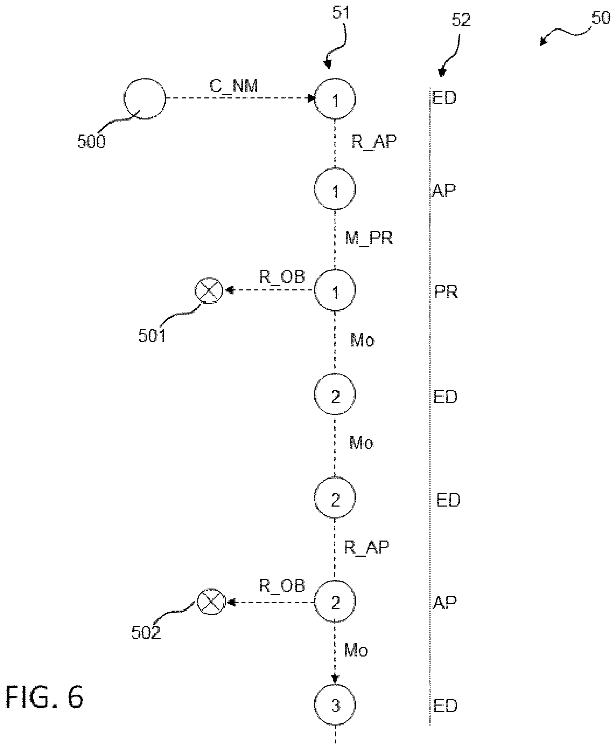

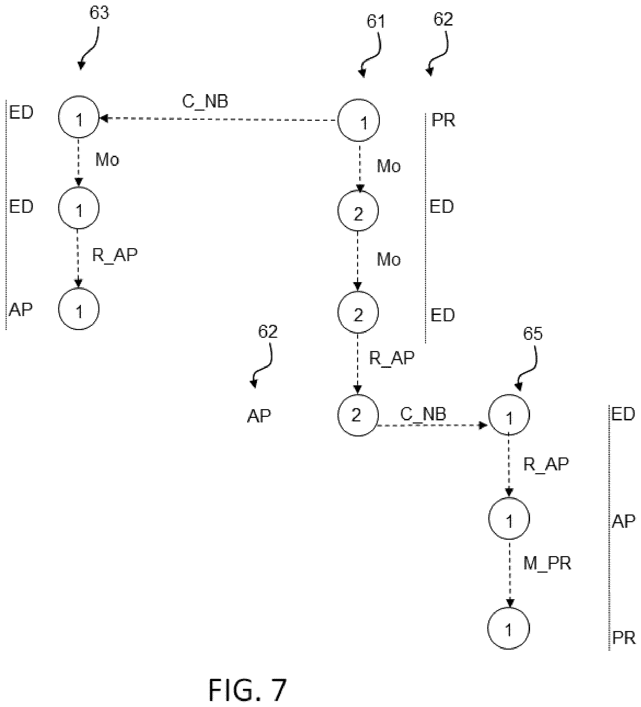

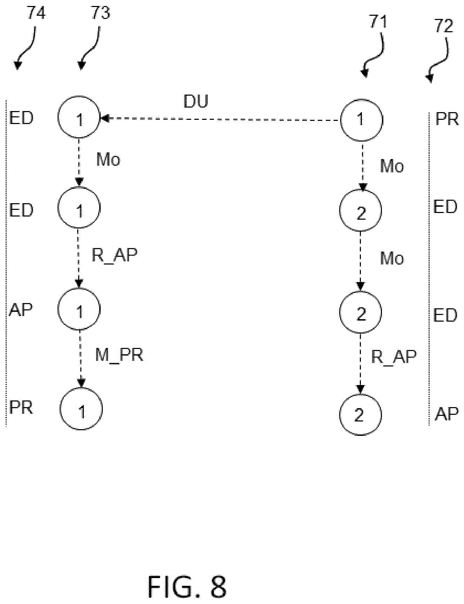

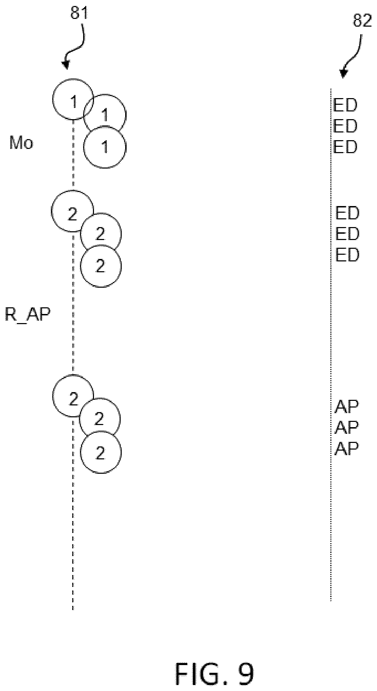

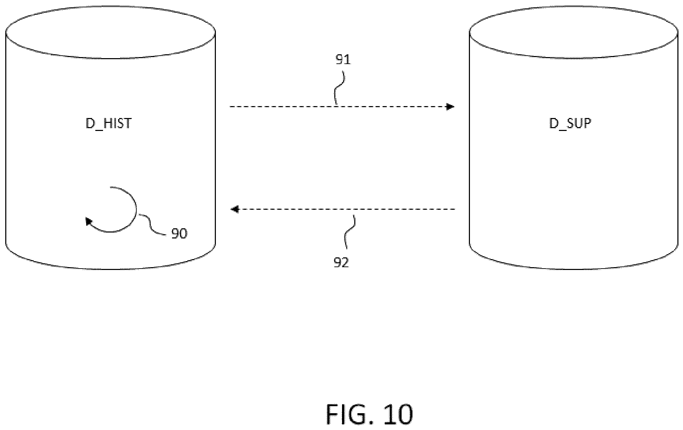

D'autres caractéristiques et avantages de l'invention ressortiront à la lecture de la description détaillée qui suit, en référence aux figures annexées, qui illustrent :
▪ figure 1 : une vue schématisée de la supervision d'une pluralité de réseaux à partir d'un centre de supervision ;
▪ figure 2 : une vue détaillée d'un réseau donné supervisé par le centre de supervision ;
▪ figure 3 : une représentation des relations entre modèles de réseaux ;
▪ la figure 4 : une représentation de la notion de branches de modèle ;
▪ la figure 5 : un schéma représentant les différents états d'un modèle, les actions permettant le passage d'un état à un autre et certaines opérations ;
▪ la figure 6 : un diagramme fonctionnel des étapes des opérations de création et de modification d'un modèle de surveillance d'un réseau ;
▪ la figure 7 : un diagramme fonctionnel des étapes d'une opération de création de branches d'un modèle de surveillance d'un réseau ;
▪ la figure 8 : un diagramme fonctionnel des étapes d'une opération de duplication d'un modèle de surveillance d'un réseau ;
▪ la figure 9 : un diagramme fonctionnel des étapes d'une opération de modifications d'un modèle parent comportant des modèles enfants ;
▪ la figure 10 : la représentation des transferts de données lors de la bascule d'un modèle à un autre.

### DESCRIPTION

Dans la suite de la description, on nommera un « objet » un élément qui est peut-être décrit par un outil de supervision d'un réseau. Un objet peut-être :
- un modèle d'un réseau ou d'un sous-réseau ;
- un composant d'un réseau.

Le cas particulier du réseau est traité comme suit : un réseau est un composant d'un modèle.

On nommera un « composant » un élément qui peut être décrit dans un modèle par l'outil de supervision d'un réseau. Un composant peut-être un équipement ou une application par exemple s'il s'agit d'un nœud ou peut être une interface ou un protocole s'il s'agit d'un lien. Les différents cas de figures sont décrits ci-après.

La figure 1 représente une vue schématisée de la supervision d'une pluralité de réseaux à partir d'un centre de supervision. Un premier réseau A1 correspond, par exemple, à un réseau d'un site industriel comprenant un ensemble d'éléments non représentés tels que des liens, routeurs, commutateurs, serveurs, postes de travail, imprimantes, etc.

Un second réseau A2 et un troisième réseau A3 sont représentés. Chaque réseau A1, A2, A3 est raccordé à un centre de supervision 10 qui comprend un ensemble d'équipements tel qu'au moins un serveur de supervision 8 et une console de gestion 9. Un administrateur peut superviser les réseaux A1, A2 et A3 au moyen de la console 9.

Le centre de supervision 10 comprend au moins une mémoire qui permet de stocker des données définissant les modèles, les composants, les liens, etc. du réseau. Une base de données relationnelle peut être utilisée pour la mise en œuvre de certaines étapes des procédés de l'invention. Il peut s'agir d'une mémoire conventionnelle d'un ordinateur, ledit ordinateur étant utilisé comme serveur. Les moyens de calculs d'un ordinateur permettent d'effectuer les différentes étapes de calculs notamment des actions et des opérations sur les modèles ainsi que les affectations ou reports des valeurs courantes (criticité, sécurité) des composants lors du basculement d'une version d'un modèle dans un état en production.

Une problématique résolue par la présente invention est la gestion améliorée du suivi des modèles de réseaux notamment dans leur évolution et leur utilisation afin de définir d'autres modèles pour d'autres réseaux. L'invention permet également d'assurer la cohérence et l'unicité des modèles utilisés notamment lors des opérations de bascules de réseaux non opérationnels à un réseau opérationnel.

Un des avantages de l'invention est d'offrir une gestion des modèles décrivant les réseaux, notamment de leur version afin de faciliter les évolutions d'un réseau donné ou les duplications.

La configuration donnée à la figure 1 a pu être obtenue par exemple à partir de deux réseaux A1 et A2 existants à un instant t₀, un troisième réseau A3 étant créé à partir du modèle définissant le réseau A1 à l'instant t₁ à l'aide d'une duplication du modèle.
▪ La figure 2 représente un exemple d'un réseau A1 supervisé par un centre de supervision 10 ; comprenant :
   - des sous-réseaux 3 comprenant des liens, des antennes, des nœuds, etc,
   - des équipements de gestion de flux de données 4 tels que des commutateurs, des routeurs, des proxy, etc., et ;
   - des équipements terminaux 2, 5, tels que des stations de travail, des imprimantes, des mobiles, etc.
   - des applications logicielles, des Framework ou un environnement de travail, etc. non représentés sur la figure 2.

Selon la configuration représentée à la figure 2, la supervision du réseau A1 est réalisée par le centre de supervision 10. Le centre de supervision 10 est amené à permettre les évolutions notamment en ce qui concerne :
- les composants d'un réseau, leurs caractéristiques utiles à la supervision, leurs révisions, leurs versions ;
- l'architecture du réseau tel que les liens, débits, qualités de services, définition de services , de protocoles, etc. ;
- les règles de sécurité appliquées au réseau et éventuellement les règles de sécurité appliquées selon :
   ∘ les profils utilisateurs auxquels correspondent des permissions, accréditations, droits d'accès à des données, etc. ;
   ∘ les règles intrinsèques aux utilisateurs selon les composants considérés, notamment des réseaux considérés, des équipements ou des flux de donnés.

Ainsi un des avantages de l'invention permet d'améliorer la capacité à opérer en supervision une version d'un même modèle d'un réseau en garantissant son unicité lorsqu'elle est utilisée en production. En outre, l'invention permet d'améliorer les opérations permettant de changer de versions d'un même modèle en maintenant une continuité de la qualité de service.

La figure 3 illustre différents modèles MG, M1, M11, M12, M13, également appelés « modèle de surveillance ». Il s'agit d'une représentation à un instant donné de la topologie d'un système d'information et des règles de sécurité associées. La topologie décrit des nœuds et des liens, un nœud pouvant être un composant physique, un composant virtuel ou applicatif, etc, et un lien pouvant être une capacité de transfert d'un nœud à un autre, un protocole de transmission, un débit, une qualité de service associé à un lien ou encore un type de flux.

Les nœuds et les liens sont identifiés comme des composants d'un modèle, un réseau pouvant lui-même être vu comme un composant particulier.

Opérationnellement, chaque composant du système supervisé se voit affecter une pondération ainsi que des métriques permettant de calculer un niveau de sécurité.

Les composants sont ensuite agencés entre eux pour former des réseaux ou sous-réseaux. Ils peuvent, par exemple, être déployés sur un site. La pondération des composants de plus bas niveaux peut être agrégée de manière à calculer des niveaux de sécurité de sous-systèmes, sous réseaux ou réseaux. Un mécanisme d'associations entre au moins un composant et au moins un objet (un composant ou un modèle) permet de répercuter des valeurs de niveaux de sécurité à des objets de plus haut niveau. C'est par exemple le cas lorsqu'on compare les niveaux de sécurité de deux sous-modèles d'un modèle parent.

Des architectures hiérarchiques permettent l'utilisation de l'imbrication de modèles et de sous-modèles comme cela est décrit sur la figure 3. Le modèle général MG peut décrire un réseau et ses éléments, notés ELTs, d'une manière générique. Il peut comprendre également des sous-modèles M1, M2 qui sont compris dans le modèle de plus haut niveau MG, appelé modèle parent.

Le modèle général MG peut comprendre la somme des composants possibles et la somme des règles de sécurités exploitables par un réseau. Par exemple, le modèle M1 peut être construit de manière à représenter un réseau d'une zone géographique. Le modèle M1 peut décrire un modèle d'un réseau, par exemple déployé sur le territoire France.

Les modèles M11, M12 et M13 peuvent décrire des sous-modèles du modèle M1 pour décrire des réseaux locaux tels qu'un réseau d'une ville. Les sous-modèles sont intégrés au modèle global tout en restant indépendants du point de vue de leur construction.

Les sous-modèles sont différents du modèle parent dans les caractéristiques qui les définissent. La notion de sous-modèle et de modèle permet de rattacher les évolutions d'un modèle parent avec les sous modèles.

Chaque modèle et sous-modèle met en œuvre des composants et des règles de sécurité associées. On parle de relation parent-enfant pour décrire un lien entre un modèle parent et les sous-modèles (modèles enfants). Ce fonctionnement implique des règles de gestion des modifications d'un modèle et d'un sous-modèle et des versions de chaque modèle et sous-modèle.

Le centre de supervision permet la surveillance des modèles et des sous-modèles appliquée aux réseaux en production, c'est-à-dire qui sont déployés et opérationnels.

La présente invention permet de définir ces règles de gestion afin d'améliorer la supervision des réseaux, notamment de plusieurs réseaux tout en garantissant l'unicité de la mise en production d'un modèle pour un réseau donné.

Notamment, une règle de gestion est définie par le fait que toute modification d'un sous-modèle doit être réalisée à partir d'un modèle parent.

Cette règle de gestion permet de maintenir une cohérence des états des modèles et des relations qui les lient, ainsi que des évolutions des versions des modèles.

Nous abordons ci-après chacune des notions correspondantes à la définition des états de modèles, des relations et des versions.

La figure 4 illustre une relation parent-enfant entre un modèle parent 40 et un ou plusieurs sous-modèles 41, 42, 43 prédéfinis qui sont rattachés audit modèle parent 40.

Le cercle 40 situé à gauche au plus haut niveau représente un modèle parent. Les modèles enfants 41, 42, 43 sont représentés dans une position décalée vis-à-vis du modèle parent. La représentation de la relation parent-enfant peut être représentée par des cercles adjacents.

Par exemple, la figure 4 représente un premier modèle 40, dit modèle parent, ayant une version X et des sous-modèles 41, 42, 43 regroupés dans le modèle parent 40 comportant trois versions respectivement notées X, Y et Z. Lors du rattachement d'un sous-modèle dans un modèle parent, le numéro de version du sous-modèle est défini indépendamment de la version du modèle parent 40. Chaque modèle ou sous-modèle comporte alors un numéro ou un chiffre indiquant le numéro de version le définissant. Seul le passage dans un nouveau numéro de version du modèle parent entraine le passage dans un nouveau numéro de version des modèles enfants.

Un modèle de surveillance, appelé plus simplement « modèle » dans la présente description, est donc défini notamment par une version. Une version permet de décrire les différentes variations de contenu et de règles de surveillance d'un modèle.

Chaque version peut comporter des ajouts, suppressions, modifications vis-à-vis d'une version antérieure.

On distingue la notion de révision qui définit les modifications d'un modèle (ou d'un composant) à chaque sauvegarde, de la notion de version qui définit un ensemble de modifications qui sont tracées, permettant de définir des évolutions figées d'un modèle. La révision est une opération automatique dès lors qu'une modification est sauvegardée. En revanche, la version peut être vue comme une opération manuelle qui émane du souhait d'un administrateur ou d'un superviseur d'éditer une nouvelle version correspondant à la prise en compte d'un lot de modifications/évolutions. Une nouvelle version peut être le fruit de différentes révisions successives.

L'invention permet de définir également à partir du centre de supervision des branches de modèles qui sont issues d'un modèle parent.

Chaque version ou branche peut comporter des spécificités telles que :
- la définition de nouvelles règles de calcul pour la définition de différents niveaux de sécurité ;
- la définition de métriques propres à une version ou à une branche créée ;
- la définition de composants supplémentaires qui sont définis pour un usage particulier.

Un modèle de surveillance peut être décliné en plusieurs versions et branches partageant une base commune. La définition de nouvelles branches ou versions est réalisée à partir de cette base commune par adjonctions ou modifications.

Selon des exemples possibles, on peut citer les cas suivants pour illustrer la cohabitation de différentes versions ou branches d'un même modèle parent :
- trois versions d'un même modèle parent définissant une branche principale ;
- une dérivation d'une première nouvelle branche du modèle parent ayant deux versions successives différentes ;
- une dérivation d'une seconde nouvelle branche du modèle parent ayant une version identique à celle de la version du modèle parent.

Le procédé de l'invention permet de définir un état d'un modèle. L'état d'un modèle permet notamment de garantir une unique utilisation d'un modèle lorsque le modèle est en production.

Pour identifier quels modèles sont en cours d'utilisation, un état leur est attribué parmi la liste suivante :
- L'état « en production » : signifie que le modèle est en cours d'utilisation, c'est-à-dire que c'est sa représentation du réseau qui est utilisée pour la supervision de la sécurité. Tous les sous-modèles éventuels sont en production aussi.
- L'état « applicable » : signifie que le modèle a été validé par un opérateur ou un administrateur et est désormais figé. Lorsqu'un modèle est applicable, il peut être utilisé en production. Il s'agit d'un état intermédiaire permettant de valider un modèle avant sa mise en production.
- L'état « en édition » : signifie que le modèle est en cours de construction et nécessite encore des modifications telles que des améliorations avant d'être validé. Il passera alors dans l'état applicable.
- L'état « Obsolète » : signifie qu'un modèle a été déclaré comme obsolète et n'est plus utilisé par le centre de supervision, il peut alors être supprimé ou archivé.

On distingue les « actions » et les « opérations » effectuées sur un modèle.

Les actions définissent des passages d'un état à un autre. Une action réunit les caractéristiques nécessaires au passage d'un état d'un modèle à un autre état.

Les opérations définissent des « manipulations » particulières sur un modèle telles qu'une création, une suppression, une modification, une duplication, une affectation de valeurs de composants, etc.

Les procédés de l'invention réunissent pour chacun d'eux un ensemble d'actions et d'opérations afin d'aboutir à un objectif.

Les procédés de l'invention regroupent :
- Un procédé de génération d'une nouvelle version d'un modèle. Ce procédé comprend un ensemble d'actions et d'opérations.
- Un procédé de basculement d'une version d'un état applicable à un état en production. Ce procédé comporte un ensemble d'opérations et d'actions.
- Un procédé de duplication d'un modèle. Ce procédé ne comporte qu'un ensemble d'actions.
- Un procédé de génération d'une nouvelle branche. Ce procédé comporte un ensemble d'actions et un ensemble d'opérations.

Les procédés sont décrits ci-après plus en détails au regard des actions et opérations nécessaires à leur exécution.

Le procédé de génération d'une version d'un modèle selon l'invention permet de définir une unique version d'un modèle. Une version est par défaut définie dans une branche principale lorsqu'une seule branche est définie ou, dans le cas contraire, est associée à une branche secondaire. Une seule version d'un modèle donné peut être dans l'état en production à un instant donné, toute branche confondue.

Un couple {branche, version} est unique parmi tous les couples possibles {branche ; version} d'un modèle.

Pour chaque modèle, et en fonction de leur état, un certain ensemble d'opérations est possible. Ces opérations comportent certaines restrictions afin de garantir la cohérence au sein d'un même modèle. Elles diffèrent selon les états à partir desquels elles sont réalisées.

Une opération de modification d'un modèle permet de modifier les règles et paramètres contenus dans un modèle. Cette opération ne peut être appliquée que si le modèle est dans l'état « en édition ». A la suite d'un ensemble de modifications validées, le superviseur ou administrateur peut décider d'incrémenter la version du modèle en édition en validant cette dernière.

Un procédé de création d'une nouvelle version aboutit à définir une nouvelle version d'un modèle dans un état « en édition » et débute par exemple à la version 1 lorsqu'il s'agit de la première version. Lorsque qu'il s'agit d'une nouvelle version générée à partir d'une version déjà définie dans l'état applicable ou en production, le numéro de version s'incrémente.

Un procédé de création d'une nouvelle branche permet la création d'une nouvelle version d'un modèle comportant déjà une branche principale. La nouvelle branche est une branche secondaire de la branche principale. Lors de la création d'une nouvelle branche, la version créée de la branche secondaire du modèle est alors dans l'état « en édition » et débute par exemple à la version 1.

Un procédé de création d'une nouvelle branche permet de dériver la représentation d'une version d'un modèle afin de le décrire différemment.

Par exemple, si différents degrés de surveillance sont définis engageant des mesures particulières ou des règles de sécurité différentes selon le degré choisi alors la création de branche permet une gestion efficace des modèles. C'est par exemple le cas quand un administrateur souhaite décrire des degrés de sécurité différents selon les tranches horaires. Un version d'une branche principale d'un modèle peut être utilisée de jour et une autre version d'une branche secondaire peut être utilisée de nuit, les règles étant par exemple plus strictes de nuit.

Un procédé de duplication d'un modèle est défini par un ensemble d'opérations qui génèrent la reproduction d'un modèle et de son contenu entièrement. Cette opération peut être utile lorsqu'un réseau supervisé comporte plusieurs zones similaires à superviser. Le modèle dupliqué est totalement indépendant du modèle d'origine et sa version est donc initialisée à 1. Le procédé de duplication peut correspondre à une opération en tant que telle qui peut être effectuée sur un modèle.

Lorsqu'un modèle, dans l'état applicable, passe dans l'état en production, il remplace le dernier modèle en production, cette action particulière est notée par la suite un « basculement ». Un basculement comprend, en outre, des opérations.

Une action permettant le passage d'un modèle initialement dans l'état « en édition » vers un « état applicable » permet de rendre applicable un modèle et donc de le figer afin de le déclarer prêt pour une mise en production.

Une action permettant le passage d'un modèle initialement dans l'état « applicable » vers un « en production » est un procédé de basculement d'un modèle pour sa mise en production. Le passage à l'état « en production » indique que le modèle est désormais supervisé par le centre de supervision. C'est la topologie du modèle en production qui est utilisée avec ses règles de sécurité.

Si un précédent modèle était dans l'état « en production », une nouvelle version est incrémentée, les valeurs courantes relatives à la criticité et des composants de ce modèle et des valeurs de sécurité relatives aux règles de sécurité des composants sont sauvegardées lors de son changement d'états, par exemple lorsqu'il passe vers un état applicable ou en édition ou obsolète. Une continuité de fonctionnement et une cohérence dans la supervision du réseau peuvent être assurées lors de la supervision d'un modèle applicable qui vient de basculer dans l'état en production par la réattribution des valeurs précédemment sauvegardées aux composants du nouveau modèle en production.

Une action permet de sortir un modèle de l'état « en production » par exemple par un mécanisme de passage du modèle vers un état « en édition » ou « applicable » ou « obsolète ». Cette action signifie que la précédente représentation issue du modèle qui n'est plus en production ne correspond plus à la réalité du réseau ni à ses règles de sécurité que l'on souhaite superviser.

Une action pour rendre obsolète une version d'un modèle permet de rendre impossible définitivement son utilisation en supervision.

La figure 5 représente les différents changements d'états d'un modèle selon les actions engagées. Un modèle en édition ED peut être modifié selon une opération M_ED. Lorsqu'il est modifié, le modèle retourne dans l'état en édition ED. Lorsqu'un administrateur souhaite rendre applicable le modèle en édition, il engage une action visant à effectuer le passage du modèle de l'état « en édition » à l'état « applicable », l'action est notée R_AP. A contrario, lorsqu'il souhaite rendre le modèle obsolète, il engage une action visant à effectuer le passage du modèle de l'état « en édition » à l'état « obsolète », l'action est notée R_OB. Suite à cette action R_OB, le modèle peut être définitivement supprimé de l'outil d'administration des modèles selon une opération notée SU.

Un modèle applicable AP peut passer directement dans l'état obsolète OB par une action identique R_OB.

Un modèle dans l'état applicable AP peut passer dans l'état en production PR par une action de mise en production M_PO. Il est possible « de sortir » la version du modèle de l'état en production notamment par l'action S_PO qui vise à passer le modèle de l'état en production à l'état applicable. Ainsi plusieurs versions d'un modèle peuvent coexister dans l'état applicable AP alors que pour un même réseau, deux versions d'un même modèle ne peuvent pas être dans l'état en production PR. Par exemple, si deux modèles applicables représentent deux configurations différentes de sécurité de type « de jour » et « de nuit », elles peuvent basculer une première fois l'une et l'autre à un horaire fixe de la journée et rebasculer une seconde fois à un autre horaire. On rappelle que le passage de l'état applicable à l'état en production d'un modèle est appelé un « basculement » ou une mise en production d'un modèle.

La version d'un modèle en production PR peut être utilisée pour définir :
- une nouvelle version C_NV du modèle ou ;
- une version de départ d'une nouvelle branche C_NB du modèle ou encore ;
- un nouveau modèle N_NM par une opération de duplication Du.

Lors de la création d'un nouveau modèle par une opération de duplication, le modèle créé est totalement indépendant de celui qui est en production PR.

Une version d'un modèle en édition ED peut être utilisée pour définir :
- une version de départ d'une nouvelle branche C_NB du modèle ou ;
- une nouveau modèle C_NM par une opération de duplication, notée Du.

Une version d'un modèle dans l'état applicable AP peut être utilisée pour définir :
- une version de départ d'une nouvelle branche C_NB du modèle ;
- un nouveau modèle C_NM par une opération de duplication Du ou encore ;
- une nouvelle version C_NV du modèle.

La figure 6 représente un diagramme fonctionnel 50 des opérations ou actions visant à :
- changer d'état la version d'un modèle ou ;
- modifier la version d'un modèle, ou ;
- créer une nouvelle version d'un modèle.

Afin de faciliter la lecture de ce diagramme fonctionnel, l'enchainement des actions et des opérations est représenté selon le diagramme 51 correspondant à une branche principale. Le diagramme d'états 52 permet d'indiquer les états des modèles en les associant à coté de chaque modification, il est juxtaposé à la branche 51.

La figure 6 représente le cas d'une seule branche principale 51. Une étape initiale 500 permet de définir la création d'un nouveau modèle, l'opération de création est notée C_NM, elle vise la création d'un modèle initial en édition ED pouvant être modifié. C'est l'opérateur qui décide d'initialiser une création d'un nouveau modèle. L'état de ce modèle est en édition ED jusqu'à ce qu'une version 1 du modèle soit validée .

Lorsque la version 1 du modèle est validée, le modèle peut passer d'un état en édition à un état applicable AP par l'action R_AP. Le modèle est toujours en version 1. A ce stade, le modèle peut alors être basculé en production PR par une action de mise en production M_PR. Cette action peut comprendre une opération de vérification que le modèle avant de basculer était bien originellement dans l'état applicable AP. Le modèle en production comme l'indique la figure 6 est en version 1.

Lorsque le modèle en production est modifié, il peut soit passer dans l'état obsolète par une action R_OB en vue d'une suppression 501, soit revenir à un état en édition ED, ces deux options sont représentées sur la figure 6.

Si le modèle est modifié par une opération notée Mo, sa version s'incrémente alors automatiquement en version 2 et son état passe en édition. Il peut y avoir autant de modifications que nécessaire générant des révisions à chaque sauvegarde. Lorsque la version 2 est prête, elle peut être figée par une action R_AP permettant le passage du modèle de l'état en édition ED à l'état applicable AP. Cet état applicable AP est un état préalable nécessaire au passage dans l'état en production PR du modèle, cette dernière opération n'étant pas représentée sur la figure 6. Il est possible également, comme le représente la figure 6, de passer un modèle de l'état applicable AP à l'état en édition ED par une action Mo, ce qui impose l'incrémentation du numéro de version qui est notée version 3 dans le dernier cercle de la branche principale.

De l'état applicable, il peut passer dans l'état obsolète par une action R_OB en vue d'une suppression 502.

La figure 7 représente un exemple de mise en œuvre de certaines étapes du procédé de création de nouvelles branches à partir d'un même modèle. On rappelle qu'un numéro de version et l'identification d'une branche donnée permettent de définir une unique version d'un modèle à un instant donnée. Une branche principale 61 est représentée. Les états correspondants aux opérations et actions effectuées sur le modèle de cette branche principale sont représentés sur un diagramme d'états 62 juxtaposé à la branche principale sur la figure 7.

Un modèle initial en production PR est modifié par une opération Mo pour générer une version 2. La version du modèle passe alors dans un état en édition ED.

Il peut y avoir autant de modifications que nécessaire générant des révisions à chaque sauvegarde. Lorsque la version 2 est prête, elle peut être figée par une opération de validation et une action R_AP permettant de passer de l'état en édition ED à l'état applicable.

Il est possible de générer une seconde branche 63, dite branche secondaire, du modèle en production PR par une opération C_NB. Dans ce cas, la version du modèle originellement dans la branche principale 61 en version 1 reprend à partir d'une nouvelle version dont le numéro peut débuter à 1. Une version d'un modèle est de toute manière identifiée de manière unique par son numéro de version et son numéro de branche, ce qui garantit l'unicité d'une version d'un modèle.

La nouvelle branche 63 commence nécessairement par une nouvelle version du modèle dans un état en édition ED. La version modèle en édition ED de la branche 63 peut être modifiée jusqu'à ce que la version soit validée et que son passage dans un état applicable soit réalisé par une action R_AP. On comprend que ce cas pourrait correspondre à un exemple de type : l'ajout d'applications métiers dans une branche secondaire d'un modèle alors que la branche principale de ce même modèle ne comprend que des infrastructures réseaux.

La figure 7 représente le cas également où une seconde branche 65, est créée à partir d'une version 2 de la branche principale du modèle. Une opération C_NB du modèle de la branche principale 61 permet de créer une seconde branche secondaire 65.

Une nouvelle version de cette branche secondaire 65 est créée, par exemple la version 1. La version 1 du modèle de la branche 65 est dans un état en édition ED. Le modèle de la branche 65 peut être successivement rendu applicable AP et en production PR dans sa version initiale 1, le couple {branche ; version} définissant un unique couple.

La figure 8 représente un exemple de mise en œuvre de certaines étapes du procédé de duplication d'une branche. Une branche principale 71 est représentée. Les états correspondants aux opérations et actions effectuées sur le modèle de cette branche principale sont représentés sur un diagramme d'états 72 juxtaposé à la branche principale sur la figure 8.

Un modèle de la branche principale 71 dans une version 1 dans l'état en production est modifié par une opération Mo pour faire évoluer sa version. Le modèle passe alors dans l'état en édition ED. l'incrémentation du numéro de version permet de définir une version 2 qui peut être modifiée jusqu'à ce que la version soit validée par une opération de validation et une action R_AP permettant le passage de la version du modèle dans l'état applicable AP .

Parallèlement aux modifications apportées au modèle de la branche principale 71, une opération de duplication, notée « Du », peut être engagée à partir de la version 1 du modèle en production de la branche principale 71. La duplication permet la création d'une seconde branche principale 73, autrement dit d'un modèle totalement indépendant.

Les états correspondants aux opérations et actions effectuées sur le modèle de cette branche principale 73 sont représentés sur un diagramme d'états 74 juxtaposé à cette branche sur la figure 8.

La nouvelle branche principale 73 issue de la duplication de la branche 71 permet de définir une version 1 du modèle dans l'état en édition ED. Ce modèle peut être modifié par des opérations Mo jusqu'au passage de la version 1 dans un état applicable AP. La version 1 peut alors être basculée dans un état en production PR.

Il est possible à partir d'une branche principale d'effectuer les opérations telles que précédemment définies par exemple de manière itérative.

Notamment, il est possible de définir le même mécanisme en associant la gestion de sous-modèles à chaque état. La figure 9 représente un modèle parent d'un branche principale 81 et les états associés 82. Le modèle parent comprend deux sous-modèles dans une version 1 dans un état en édition ED. Des modifications Mo peuvent être effectuées sur le modèle parent de manière à définir une nouvelle version 2 du modèle parent. Les versions du modèle parent et des sous-modèles sont incrémentées de manière à permettre un passage dans l'état applicable des modèles et sous-modèles dans la version 2.

L'invention permet de définir les principales caractéristiques d'un modèle telle que sa version, sa relation parent-enfant, son état, ainsi que les mécanismes de création d'une branche et de duplication d'un modèle de manière à créer de nouveaux modèles à partir d'un modèle de base.

Selon un autre aspect de l'invention, un procédé permet de définir le principe de passage d'un état à un autre notamment le passage d'un état applicable à un état en production. Ce dernier passage est appelé comme indiqué précédemment « basculement » et il correspond à la mise en production d'une nouvelle version d'un modèle. Il y a donc une substitution d'une version antérieure opérationnelle d'un modèle par une version nouvelle non encore opérationnelle du même modèle.

De manière à assurer la supervision d'un modèle, un premier ensemble de données est défini pour la supervision, appelées « données de supervision ». Une seule version d'un même modèle peut être en état en production PR. Ces données ne tiennent pas compte des versions et des historisations des versions telles que les révisions et les associations entre composants ou les associations entre composants et modèles. Cet ensemble est noté par la suite ensemble de données de supervision.

Un second ensemble de données, appelés ensemble de données d'historisation définit les évolutions successives des modèles. Il comprend notamment les données de révisions et de suivi des versions notamment des versions des composants.

Les deux ensembles de données peuvent être stockées dans une mémoire du centre de supervision et/ou dans un centre distant par exemple aux fins d'une sauvegarde. Les données peuvent être stockées dans des bases de données, par exemple des bases de données relationnelles.

La figure 10 représente des opérations visant à :
- extraire et recopier 91 des données D_HIST du 1^{er} ensemble de données vers le 2^{ème} ensemble D_SUP de données ;
- établir un lien entre les données du 2ème ensemble D_SUP vers les données du 1^{er} ensemble D_HIST.

Pour assurer la gestion des versions de la représentation des modèles, toutes les données des composants ou des modèles peuvent être regroupées selon trois notions.

Une première notion correspond à l'identité d'un objet, c'est-à-dire à celle d'un modèle ou d'un composant. Il s'agit d'une notion permettant d'identifier un objet de manière unique et stable dans le temps et l'espace. Ainsi quelles que soient les modifications apportées à un objet, l'identité reste la même. Il en va de même lorsque les modèles de surveillance sont répliqués vers un autre système de gestion de bases de données. L'unicité de l'identité est assurée au moyen d'une identité globale dite immuable et notée UUID. Une identité locale ID permet, en revanche, d'assurer la multi-représentativité des versions d'un même modèle. La multi-représentativité est définie comme la faculté de représenter un modèle, par exemple sur un afficheur, de différentes manières. Les différentes manières peuvent consister à choisir une version donnée.

Une seconde notion correspond à l'état des valeurs des données portées par une identité prédéfinie. Un état peut varier au cours du temps ou d'un modèle à l'autre.

Une troisième notion correspond à un modèle de surveillance dans lequel un composant est présent. Un composant peut être dans plusieurs versions d'un même modèle.

La représentation du réseau supervisé est décrite par les trois notions ci-dessus et sont, de ce fait, uniques.

Chaque modèle comprend une identité immuable notée UUID, une identité locale ID, une version VER et une révision REV active et un ensemble de révisions archivées REVi qui représentent les évolutions successives et sauvegardées d'une version.

Chaque composant d'un modèle comprend également une identité immuable UUID, une identité locale ID, une version VER et une révision active REV ainsi qu'un ensemble de révisions archivées REVi.

L'identité locale est définie par un système de gestion de bases de données du centre de supervision dans laquelle est définie le composant ou le modèle. Il s'agit donc d'une identité attribuée par l'outil de gestion des objets. Cette identité locale est amenée à évoluer selon les opérations effectuées soit sur les modèles soit sur les composants.

L'identité immuable est une identité unique et immuable qui reste identique tout au long de la vie d'un modèle ou d'un composant.

Deux versions d'un même modèle possèdent la même identité immuable mais comportent des révisions différentes et une identité locale différente.

En outre, chaque composant d'un modèle comprend une référence à son modèle. Cela traduit le fait qu'un composant est dans un état déterminé pour chaque version d'un modèle.

Un même composant peut ainsi être dans deux états différents pour chacune des deux versions d'un même modèle, c'est-à-dire avoir par exemple un autre nom, une autre description ou autre adresse IP, voire ne pas exister du tout dans une certaine version du même modèle.

Un ensemble de données de supervision comprend :
- un ensemble de données de composants décrivant les différents composants du réseau ou du système d'information ;
- un premier ensemble de données d'exploitation comportant des valeurs de criticité des différents composants ;
- un second ensemble de données d'exploitation comportant les règles de sécurité qui s'appliquent aux composants du système d'information, règles définissant des valeurs de sécurité des différents composants.

Les données de supervision associent à une identité immuable UUID toutes les valeurs qui lui ont été affectées lorsque le modèle comprenant le composant d'identité UUID était en production ainsi que les versions de modèle dans lesquelles elle est définie. On peut garder et retrouver ainsi l'historique des valeurs de sécurité des composants pour un niveau de sécurité d'un même réseau à travers ses différentes modifications qui ont été effectuées.

Un ensemble de données d'historisation comprend toutes les données de révision des composants et des modèles.

Un ensemble de données d'association comprend toutes les données permettant d'associer entre eux les composants d'un modèle parent ou les composants de modèles parents avec des sous-modèles. Une association comprend pour chacun des deux composants liés, l'identification immuable du composant et l'identification de la révision du modèle qui le contient.

Chaque association comprend un identifiant local ID et :
- les identifications immuables de chaque composant de l'association et ;
- la révision du modèle comprenant les composants liés.

Les associations ne sont pas représentées directement comme associant les identifiants des éléments du modèle. En effet, les associations décrivent le ou les lien(s) entre deux identités, lien valable dans certaines versions de modèles. La cohérence de l'association peut être vérifiée par un mécanisme de triple clef vérifiant :
- que l'élément parent existe dans la version du modèle spécifiée,
- que l'élément enfant existe dans la version du modèle spécifiée,
- que la version du modèle contenant l'élément enfant est bien un sous modèle de la version du modèle comprenant l'élément parent.

Si l'une de ces conditions n'est pas vérifiée, l'association n'a pas de sens et n'est pas autorisée, si elle est déjà créée elle peut être supprimée par le centre de supervision. Une base de données relationnelle peut être utilisée afin d'effectuer cette vérification.

Lors de la création d'une nouvelle branche ou d'une nouvelle version, un certain nombre de modifications sont nécessaires, notamment :
- la génération d'une nouvelle révision de la nouvelle version du modèle à partir des données de révision de la version antérieure du modèle ;
- la conservation de l'identité globale de la version antérieure du modèle, cette identité globale définissant l'identité globale de la nouvelle version du modèle;
- la reproduction des données des composants de la version antérieure du modèle ainsi que leurs données de révision, chaque composant reproduit comprenant :
   ∘ une nouvelle identification locale générée lors de la génération de la nouvelle version du modèle ;
   ∘ la conservation de l'identité globale du composant de la version antérieure du modèle ;
- la génération d'une nouvelle identification locale pour chaque association de composants de la nouvelle version du modèle ;
- la reproduction de toutes les données d'association de composants de la version antérieure du modèle.

La création d'une nouvelle version ne modifie pas l'état des composants. Un nouveau numéro de version est attribué à une nouvelle version qui est générée. Une opération visant à conserver les associations de la nouvelle version générée comprend le rétablissement de l'association entre la nouvelle version du modèle parent avec les nouvelles versions des modèles enfants.

La création d'une branche est un mécanisme semblable dans la mesure où la création d'une branche comprend la création de plusieurs fois une nouvelle version à partir de la même version d'origine.

La création d'une nouvelle version d'un modèle revient à dupliquer les composants du modèle en gardant leur identité et leur état et en transposant le modèle auquel ils appartiennent vers la nouvelle version du modèle.

La mise en production d'un modèle est une action particulière qui comprend également différentes opérations telles que :
- la prise en compte de la version du modèle de supervision précédemment créée qui devra être basculée ;
- la sauvegarde des ensembles de valeurs de criticité et de sécurité de la version antérieure du modèle actif ;
- la mise à jour des valeurs de criticité et de sécurité dans les composants de la nouvelle version du modèle à basculer à partir des dernières valeurs sauvegardées de la version antérieure de manière à assurer une continuité de fonctionnement de la supervision lors d'un passage d'une version à une autre ;
- la définition d'un identifiant pour chaque composant de la nouvelle version du modèle à basculer en production identique à l'identifiant du composant appartenant à la version antérieure en production.

L'identifiant de l'identité de chaque composant en édition (ou dans un autre état applicable) sert d'identifiant à chaque composant en production. Cette caractéristique permet d'assurer le lien avec les données de l'ensemble de données d'historisation.

Grâce à cette caractéristique, le procédé de mise en production d'une nouvelle version permet d'établir le lien entre les composants qui sont présents d'une version à l'autre d'un modèle. Ceci est possible car un composant dont l'identité est déterminée ne peut être présent qu'une seule fois dans une version d'un modèle et ne peut pas être défini dans des modèles d'identités différentes.

Le procédé comprend une récupération des dernières valeurs des données de supervision notamment des données d'exploitation pour pouvoir les reporter dans le dispositif de supervision du modèle en production.

Il est possible d'utiliser un déclencheur, qui peut être par exemple un mécanisme d'une base de données, sur l'ensemble de données de supervision du modèle en production. Ces données comprennent les valeurs des données d'exploitation. Le procédé de basculement d'une nouvelle version pour sa mise en production comprend le report des données de la version antérieure à la nouvelle version en production.

Un seul modèle d'une identité prédéfinie peut être en production à un moment donné. Pour garantir cela, le procédé de basculement d'une nouvelle version pour sa mise en production comprend une étape de vérification si une autre version du même modèle est déjà en production.

Lorsque cette vérification aboutit à ce constat, le procédé permet le passage du modèle précédemment en production dans un autre état afin de :
- le maintenir dans un état applicable pour un passage en production ultérieur ;
- l'éditer dans un état en édition ;
- le passer dans un état obsolète le cas échéant en vue d'une éventuelle suppression.

Supprimer un modèle des ensembles de données consiste à supprimer la ligne correspondant au modèle d'une table d'une base de données définissant les "Modèle" dans le cas d'une implémentation par l'utilisation d'une base de données relationnelles par exemple.

Lorsqu'une base de données relationnelle est utilisée, les règles de cascade sur les clefs étrangères engagent une propagation de la suppression à toutes les données liées à ce modèle.

La mise en production d'un modèle modifie les règles de calcul des valeurs de criticité des composants et des valeurs de sécurité et permet d'engager une étape de calcul de ces valeurs.

L'invention comprend également un procédé de duplication d'un modèle. Le procédé de duplication comprend les opérations suivantes :
- la génération d'une nouvelle identité globale d'un nouveau modèle ;
- la reproduction de toutes les données du modèle dupliqué choisi comme point de départ ;
- la génération d'une nouvelle identité globale de chaque composant reproduit à partir de ceux définis dans le modèle dupliqué ;
- la sauvegarde des données de supervision du modèle dupliqué et leur réattribution aux composants du nouveau modèle.

La génération d'une nouvelle identité globale de chaque composant reproduit à partir de ceux définis dans le modèle dupliqué est une conséquence de la duplication des composants du modèle dupliqué.

## Revendications

1. Dispositif de supervision d'un réseau, ledit dispositif comprenant :
• une mémoire pour le stockage de données définissant au moins un modèle d'un réseau et un système de gestion de données permettant de définir et de stocker un ensemble de données d'historisation et d'association,
▪ ledit modèle étant défini par au moins :
• une identification locale (ID) définie par l'application permettant de définir le modèle ;
• une identité globale (UUID) permettant de discriminer le modèle pendant toute son existence ;
• une révision (REV) qui évolue notamment avec les modifications et les sauvegardes dudit modèle ;
• une version (VER) permettant de définir un contenu du modèle et des règles de supervision spécifiques,
▪ ledit modèle permettant la supervision d'un ensemble de données de supervision comportant :
• un ensemble de données de composants décrivant les différents composants du système d'information, chaque composant comprenant :
- une identification locale (ID), définie par l'application permettant de décrire le composant ;
- une identité globale (UUID), permettant de discriminer ledit composant pendant toute son existence ;
- une révision (REV) de la représentation dudit composant ;
- une référence (REF) à un modèle comprenant le composant;
▪ l'ensemble de données de révision :
• permettant d'associer à chaque composant considéré à un instant donné une révision donnée ;
• permettant d'associer à chaque modèle considéré à un instant donné une révision donnée ;
▪ l'ensemble d'associations décrivant des liens entre différents composants d'un modèle, chaque association ayant un identifiant local (ID) et comprenant :
• les identifications globales de chaque composant de l'association et ;
• la révision du modèle comprenant les composants liés ;
• un afficheur pour visualiser au moins un modèle et ;
• un calculateur permettant d'effectuer :
∘ des opérations sur ledit modèle afin de l'éditer et ;
∘ des actions sur le dit modèle afin de lui attribuer un état de fonctionnement,
les opérations et les actions étant configurées pour permettre :
• la génération d'une nouvelle version (VER2) du modèle, ladite nouvelle version comprenant :
∘ la génération d'une nouvelle révision (REV) de la nouvelle version (VER2) du modèle à partir des données de révision de la version antérieure (VER1) du modèle ;
∘ la conservation de l'identité globale (UUID) de la version antérieure (VER1) du modèle, cette identité globale définissant l'identité globale (UUID) de la nouvelle version du modèle (VER2) ;
∘ la reproduction des données des composants de la version antérieure du modèle ainsi que leurs données de révision, chaque composant reproduit comprenant :
▪ une nouvelle identification locale (ID) générée lors de la génération de la nouvelle version (VER2) du modèle ;
▪ la conservation de l'identité globale (UUID) du composant de la version antérieure (VER1) du modèle ;
∘ la génération d'une nouvelle identification locale (ID) pour chaque association de composants de la nouvelle version du modèle ;
∘ la reproduction de toutes les données d'association de composants de la version antérieure du modèle (VER1).

2. Dispositif selon la revendication 1, **caractérisé en ce que** :
• un modèle est en outre défini par une relation existante ou non avec un modèle parent, une relation enfant-parent permettant de définir :
∘ un point d'entrée pour toute modification à apporter à un modèle enfant ;
∘ une base de composants du modèle parent liés à des composants d'un modèle enfant,
le couple {version ; relation parent-enfant} permettant d'assurer une exploitation d'une seule version d'un unique modèle à un moment donné,
• le système de gestion de données comprenant en outre : un ensemble de données de relations permettant d'associer, pour chaque modèle ayant au moins un modèle enfant, son lien de parenté avec ledit modèle enfant et réciproquement, une association comportant une identification ;
• la génération d'une nouvelle version d'un modèle comprenant la conservation de la relation parent-enfant lorsqu'elle existe.

3. Dispositif selon l'une quelconque des revendications 1 à 2, **caractérisé en ce que** l'ensemble de données de révision :
∘ permettant de classifier les différentes modifications d'un composant donné,
∘ permettant de classifier les différentes modifications d'un modèle donné,

4. Dispositif selon l'une quelconque des revendications 1 à 3, **caractérisé en ce que** les composants comprennent :
• des composants physiques tels qu'un serveur, un routeur, un ensemble de PC, des liens de raccordement réseau, un site géographique, un bâtiment ;
• des composants logiciels tels que des applications, services informatiques.

5. Dispositif selon l'une quelconque des revendications 1 à 3, **caractérisé en ce que** le système de gestion de données permet de choisir un modèle parent et d'éditer le dit modèle avant de générer une nouvelle version.

6. Dispositif de supervision d'un réseau selon l'une quelconque des revendications 1 à 5, ledit dispositif permettant d'opérer un basculement d'une nouvelle version d'un modèle de supervision d'un système d'information pour sa mise en production, une version antérieure étant active, c'est-à-dire en production et une nouvelle version étant applicable, c'est-à-dire prête à être basculée mais non encore en production, ledit modèle comprenant un ensemble de données de supervision comprenant:
• un ensemble de données d'exploitation décrivant des premières valeurs de criticité des différents composants ;
• un ensemble de données de sécurité décrivant les règles de sécurité qui s'appliquent aux composants du système d'information, ces règles définissant des secondes valeurs de sécurité des différents composants,
ledit basculement comprenant :
• le choix d'une version du modèle de supervision précédemment créée qui devra être basculée ;
• la sauvegarde du premier et du second ensemble de valeurs de criticité et de sécurité de la version antérieure du modèle actif ;
• la mise à jour des dernières valeurs de criticité et de sécurité dans les composants de la nouvelle version du modèle à basculer de manière à assurer une continuité de fonctionnement de la supervision lors d'un passage d'une version à une autre ;
• la définition d'un identifiant de chaque composant de la nouvelle version du modèle à basculer en production étant choisi de sorte qu'il corresponde à l'identifiant global du composant correspondant de la version antérieure en production.

7. Dispositif de supervision selon la revendication 6, **caractérisé en ce qu'**un contrôle de la génération de l'identification d'un composant permet d'assurer l'unicité de ladite identification parmi les identifications des composants du réseau.

8. Dispositif de supervision d'un réseau selon l'une quelconque des revendications 1 à 7, ledit dispositif permettant d'opérer une duplication d'un premier modèle de supervision d'un système d'information, un modèle étant défini par au moins :
• une identification locale (ID) définie par l'application permettant de définir le modèle ;
• une identité globale (UUID) permettant de discriminer le modèle pendant toute son existence ;
• une révision (REV) qui évolue notamment avec les modifications et les sauvegardes dudit modèle ;
• une version (VER) permettant de définir un contenu du modèle et des règles de supervision spécifiques,
ledit modèle permettant la supervision d'un ensemble de données de supervision comportant :
• un ensemble de données de composants décrivant les différents composants du système d'information, chaque composant comprenant :
- une identification locale (ID), définie par l'application permettant de décrire le composant ;
- une identité globale (UUID), permettant de discriminer ledit composant pendant toute son existence ;
- une révision (REV) de la représentation dudit composant ;
- une référence (REF) à un modèle comprenant le composant,
caractérisé en que ladite duplication comprend :
• la génération d'une nouvelle identité globale d'un nouveau modèle ;
• la reproduction de toutes les données du premier modèle choisi comme point de départ ;
• la génération d'une nouvelle identité globale de chaque composant reproduit à partir de ceux définis dans le premier modèle ;
• la sauvegarde des données de supervision définies à la revendication 4 du premier modèle et leur réattribution aux composants du nouveau modèle.

9. Dispositif de supervision d'un réseau selon l'une quelconque des revendications 1 à 7, ledit dispositif permettant d'opérer une génération d'une nouvelle branche d'un premier modèle de supervision d'un système d'information, ledit premier modèle étant défini par au moins :
• une identification locale (ID) définie par l'application permettant de définir le modèle ;
• une identité globale (UUID) permettant de discriminer le modèle pendant toute son existence ;
• une révision (REV) qui évolue notamment avec les modifications et les sauvegardes dudit modèle ;
• une version (VER) permettant de définir un contenu du modèle et des règles de supervision spécifiques,
ledit modèle permettant la supervision d'un ensemble de données de supervision comportant :
• un ensemble de données de composants décrivant les différents composants du système d'information, chaque composant comprenant :
- une identification locale (ID), définie par l'application permettant de décrire le composant ;
- une identité globale (UUID), permettant de discriminer ledit composant pendant toute son existence ;
- une révision (REV) de la représentation dudit composant ;
- une référence (REF) à un modèle comprenant le
composant;
caractérisé en que la génération d'une nouvelle branche comprend :
• la conservation de l'identité globale du premier modèle ;
• la reproduction de toutes les données du premier modèle choisi comme point de départ ;
• la reproduction des données d'association de composants ;
• la génération d'une nouvelle identité globale de chaque composant reproduit à partir de ceux définis dans le premier modèle.

10. Système de supervision d'un réseau gestion d'un système d'information, ledit système comprenant un dispositif selon l'une quelconque des revendications 1 à 9 connecté à un réseau et les composants définissant ledit réseau supervisé.

## Patentansprüche

1. Überwachungsvorrichtung eines Netzes, wobei die genannte Vorrichtung umfasst:
• einen Speicher für die Speicherung von Daten, der wenigstens ein Modell eines Netzes und ein Datenmanagementsystem definiert, die das Definieren und Speichen eines Historisierungs- und Zuordnungs-Datensatzes zulassen;
▪ wobei das genannte Modell definiert ist durch wenigstens:
• eine lokale Identifizierung (ID), die durch die Anwendung definiert ist, die das Definieren des Modells zulässt;
• eine globale Identität (UUID), die das Diskriminieren des Modells während seiner gesamten Existenz zulässt;
• eine Überprüfung (REV), die sich insbesondere mit den Änderungen und den Back-Ups des genannten Modells weiterentwickelt;
• eine Version (VER), die das Definieren eines Inhaltes des Modells und der spezifischen Überwachungsregeln zulässt,
▪ wobei das genannte Modell die Überwachung eines Überwachungs-Datensatzes zulässt, umfassend:
• einen Datensatz aus Bestandteilen, der die unterschiedlichen Bestandteile des Informationssystems beschreibt, wobei jeder Bestandteil umfasst:
- eine lokale Identifizierung (ID), die durch die Anwendung definiert ist, die das Beschreiben des Bestandteils zulässt;
- eine globale Identität (UID), die das Diskriminieren des genannten Bestandteils während seiner gesamten Existenz zulässt;
- eine Überprüfung (REV) der Darstellung des genannten Bestandteils;
- eine Bezugnahme (REF) auf ein Modell, umfassend den Bestandteil;
▪ wobei der Überprüfungs-Datensatz:
• das Zuordnen einer bestimmten Überprüfung zu jedem, zu einem bestimmten Zeitpunkt betrachteten Bestandteil zulässt;
• das Zuordnen einer bestimmten Überprüfung zu jedem, zu einem bestimmten Zeitpunkt betrachteten Modell zulässt;
▪ wobei die Zuordnungsgruppe Verbindungen zwischen unterschiedlichen Bestandteilen eines Modells beschreibt, wobei jede Zuordnung eine lokale Kennung (ID) aufweist und umfasst:
• die globalen Identifizierungen jedes Bestandteils der Zuordnung und;
• die Überprüfung des Modells, umfassend die verbundenen Bestandteile;
• einen Anzeiger zum Anzeigen wenigstens eines Modells und;
• einen Berechner, der das Durchführen zulässt von:
∘ Operationen auf dem genannten Modell, um es zu bearbeiten; und
∘ Aktionen auf dem genannten Modell, um ihm einen Betriebszustand zuzuordnen,
wobei die Operationen und die Aktionen ausgestaltet sind, um zuzulassen:
• das Erzeugen einer neuen Version (VER2) des Modells, wobei die neue Version umfasst:
∘ das Erzeugen einer neuen Überprüfung (REV) der neuen Version (VER2) des Modells ausgehend von den Überprüfungsdaten der vorherigen Version (VER1) des Modells;
∘ das Beibehalten der globalen Identität (UUID) der vorherigen Version (VER1) des Modells, wobei diese globale Identität die globale Identität (UUID) der neuen Version des Modells (VER2) definiert;
∘ die Wiedergabe der Daten der Bestandteile der vorherigen Version des Modells sowie ihrer Überprüfungsdaten, wobei jeder wiedergegebene Bestandteil umfasst:
▪ eine neue lokale Identifikation (ID), die beim Erzeugen der neuen Version (VER2) des Modells erzeugt ist;
▪ die Beibehaltung der globalen Identität (UUID) des Bestandteils der vorherigen Version (VER1) des Modells;
∘ das Erzeugen einer neuen lokalen Identifikation (ID) für jede Zuordnung von Bestandteilen der neuen Version des Modells;
o die Wiedergabe aller Zuordnungsdaten von Bestandteilen der vorherigen Version des Modells (VER1).

2. Vorrichtung gemäß Anspruch 1, **dadurch gekennzeichnet, dass**:
• ein Modell darüber hinaus durch eine bestehende oder nicht bestehende Beziehung mit einem Eltern-Modell definiert ist, wobei eine Eltern-Kind-Beziehung das Definieren zulässt:
∘ eines Eingangspunktes für jede an einem Kind-Modell anzubringende Änderung;
∘ einer Bank von Bestandteilen des Eltern-Modells, die mit Bestandteilen eines Kind-Modells verbunden sind,
das Paar {Version; Eltern-Kind-Beziehung} das Gewährleisten eines Betriebs einer einzigen Version eines einzigen Modells zu einem bestimmten Zeitpunkt zulässt;
• das Datenmanagement-System darüber hinaus umfasst: eine Gruppe von Datenbeziehungen, die für jedes Modell, das wenigstens ein Kind-Modell aufweist, das Zuordnen seiner Eltern-Verbindung zu dem genannten Kind-Modell und umgekehrt zulässt, wobei einer Zuordnung eine Identifizierung umfasst;
• das Erzeugen einer neuen Version eines Modells, das das Beibehalten der Eltern-Kind-Beziehung umfasst, wenn sie vorhanden ist.

3. Vorrichtung gemäß irgendeinem der Ansprüche 1 bis 2, **dadurch gekennzeichnet, dass** die Gruppe von Überprüfungsdaten:
∘ das Einordnen der unterschiedlichen Änderungen eines bestimmten Bestandteils zulässt,
∘ das Einordnen der unterschiedlichen Änderungen eines bestimmten Modells zulässt.

4. Vorrichtung gemäß irgendeinem der Ansprüche 1 bis 3, **dadurch gekennzeichnet, dass** die Bestandteile umfassen:
• physische Bestandteile, wie z. B. einen Server, einen Router, eine PC-Gruppe, Netzanschluss-Verbindungen, einen geografischen Standort, ein Gebäude;
• Software-Bestandteile, wie z. B. Anwendungen, Informatikdienste.

5. Vorrichtung gemäß irgendeinem der Ansprüche 1 bis 3, **dadurch gekennzeichnet, dass** das Datenmanagement-System das Auswählen eines Eltern-Modells und das Bearbeiten des genannten Modells vor dem Erzeugen einer neuen Version zulässt.

6. Überwachungsvorrichtung eines Netzes gemäß irgendeinem der Ansprüche 1 bis 5, wobei die genannte Vorrichtung das Durchführen eines Umschaltens einer neuen Version eines Überwachungsmodells eines Informatiksystems für sein Einführen in die Produktion zulässt, wobei eine vorherige Version aktiv, d. h. in Produktion, ist und eine neue Version gültig, d. h. bereit ist, geschaltet zu werden, jedoch noch nicht in Produktion ist, wobei das genannte Modell eine Gruppe von Überwachungsdaten umfasst, umfassend:
• eine Gruppe von Betriebsdaten, die erste Kritikalitätsdaten der unterschiedlichen Bestandteile beschreiben;
• eine Gruppe von Sicherheitsdaten, die die Sicherheitsregeln beschreiben, die auf die Bestandteile des Informationssystems Anwendung finden, wobei diese Regeln zweite Sicherheitswerte der unterschiedlichen Bestandteile definieren,
wobei das genannte Umschalten umfasst:
• die Wahl einer Version des zuvor angelegten Überwachungsmodells, das umgeschaltet werden soll;
• das Back-Up der ersten und zweiten Gruppe von Kritikalitäts- und Sicherheitswerten der vorherigen Version des aktiven Modells;
• die Aktualisierung der letzten Kritikalitäts- und Sicherheitswerte in den Bestandteilen der neuen Version des umzuschaltenden Modells derart, dass eine Funktionskontinuität der Überwachung bei einem Übergang von einer Version zur anderen gewährleistet ist;
• wobei die Definition einer Kennung jedes Bestandteils der neuen Version des Modells, das in der Produktion umgeschaltet werden soll, derart ausgewählt ist, dass es die globale Kennung des Bestandteils entspricht, der der vorherigen Version in der Produktion entspricht.

7. Überwachungsvorrichtung gemäß Anspruch 6, **dadurch gekennzeichnet, dass** eine Kontrolle des Erzeugens der Identifizierung eines Bestandteils das Gewährleisten der Einmaligkeit der genannten Identifikation aus den Identifikationen der Bestandteile des Netzes zulässt.

8. Überwachungsvorrichtung eines Netzes gemäß irgendeinem der Ansprüche 1 bis 7, wobei die genannte Vorrichtung das Durchführen einer Duplizierung eines ersten Überwachungsmodells eines Informationssystems zulässt, wobei ein Modell definiert ist durch wenigstens:
• eine lokale Identifikation (ID), die durch die Anwendung definiert ist, die das Definieren des Modells zulässt;
• eine globale Identität (UUID), die das Diskriminieren des Modells während seiner gesamten Existenz zulässt;
• eine Überprüfung (REV), die sich insbesondere mit den Abänderungen und den Back-Ups des genannten Modells weiterentwickelt;
• eine Version (VER), die das Definieren eines Inhaltes des Modells und der spezifischen Überwachungsregeln zulässt,
wobei das genannte Modell die Überwachung einer Gruppe von Überwachungsdaten zulässt, umfassend:
• eine Gruppe von Daten von Bestandteilen, die die unterschiedlichen Bestandteile des Informationssystems beschreiben, wobei jeder Bestandteil umfasst:
- eine lokale Identität (ID), die durch die Anwendung definiert ist, die das Beschreiben des Bestandteils zulässt;
- eine globale Identität (UUID), die das Diskriminieren des genannten Bestandteils während seiner gesamten Existenz zulässt;
- eine Überprüfung (REV) der Darstellung des genannten Bestandteils;
- eine Bezugnahme (REF) auf ein Modell, umfassend den Bestandteil;
**dadurch gekennzeichnet, dass** das genannte Duplizieren umfasst:
• das Erzeugen einer neuen globalen Identität eines neuen Modells;
• die Wiedergabe aller Daten des ersten Modells, das als Ausgangspunkt gewählt ist;
• das Erzeugen einer neuen globalen Identität jedes Bestandteils, der ausgehend von denen wiedergegeben ist, die in dem ersten Modell definiert sind;
• das Back-Up der Überwachungsdaten, die in Anspruch 4 des ersten Modells definiert sind, und ihre Neuzuordnung zu den Bestandteilen des neuen Modells.

9. Überwachungsvorrichtung eines Netzes gemäß irgendeinem der Ansprüche 1 bis 7, wobei die genannte Vorrichtung das Durchführen einer Erzeugung eines neuen Zweigs eines ersten Überwachungsmodells eines Informationssystems zulässt, wobei das genannte erste Modell definiert ist durch wenigstens:
• eine lokale Identifikation (ID), die durch die Anwendung definiert ist, die das Definieren des Modells zulässt;
• eine globale Identität (UUID), die das Diskriminieren des Modells während seiner gesamten Existenz zulässt;
• eine Überprüfung (REV), die sich insbesondere mit den Abänderungen und den Back-Ups des genannten Modells weiterentwickelt;
• eine Version (VER), die das Definieren eines Inhaltes des Modells und der spezifischen Überwachungsregeln zulässt,
wobei das genannte Modell die Überwachung einer Gruppe von Überwachungsdaten zulässt, umfassend:
• eine Gruppe von Daten von Bestandteilen, die die unterschiedlichen Bestandteile des Informationssystems beschreiben, wobei jeder Bestandteil umfasst:
- eine lokale Identifikation (ID), die durch die Anwendung definiert ist, die das Beschreiben des Bestandteils zulässt;
- eine globale Identität (UUID), die das Diskriminieren des genannten Bestandteils während seiner gesamten Existenz zulässt;
- eine Überprüfung (REV) der Darstellung des genannten Bestandteils;
- eine Bezugnahme (REF) auf ein Modell, umfassend den Bestandteil;
**dadurch gekennzeichnet, dass** das Erzeugen eines neuen Zweiges umfasst:
• das Beibehalten der globalen Identität des ersten Modells;
• die Wiedergabe aller Daten des ersten Modells, das als Ausgangspunkt gewählt ist;
• die Wiedergabe der Zuordnungsdaten von Bestandteilen;
• das Erzeugen einer neuen globalen Identität jedes Bestandteils, der ausgehend von denen wiedergegeben wird, die in dem ersten Modell definiert sind.

10. Überwachungssystem eines Verwaltungsnetzes eines Informationssystems, wobei das genannte System eine Vorrichtung gemäß irgendeinem der Ansprüche 1 bis 9 umfasst, das an ein Netz angeschlossen ist, und wobei die Bestanteile das genannte überwachte Netz definieren.

## Claims

1. A device for supervising a network, said device comprising:
• a memory for storing data defining at least one model of a network and a data management system enabling a historization and association data set to be defined and stored,
▪ said model being defined by at least:
• one local identification (ID) defined by the application enabling the model to be defined;
• one global identity (UUID) enabling the model to be discriminated throughout its lifetime;
• one revision (REV) which evolves in particular with the modifications and savings of said model;
• one version (VER) enabling a content of the model and specific supervision rules to be defined,
▪ said model allowing the supervision of a supervision data set including:
• a data set of components describing the different components of the information system, each component comprising:
- a local identification (ID), defined by the application enabling the component to be described;
- a global identity (UUID), enabling said component to be discriminated throughout its lifetime;
- a revision (REV) of the representation of said component;
- a reference (REF) to a model comprising the component;
▪ the revision data set:
• enabling each component considered at a given instant to be associated with a given revision;
• enabling each model considered at a given instant to be associated with a given revision;
▪ the association set describing links between different components of a model, each association having a local identifier (ID) and comprising:
• the global identifications of each component of the association and;
• the revision of the model comprising the linked components;
• a display for viewing at least one model and;
• a calculator enabling to perform:
∘ operations on said model in order to edit it and;
∘ actions on said model in order to assign an operating state to it,
wherein the operations and actions can be configured to enable:
• generating a new version (VER2) of the model, said new version comprising:
∘ generating a new revision (REV) of the new version (VER2) of the model from the revision data of the previous version (VER1) of the model;
∘ preserving the global identity (UUID) of the previous version (VER1) of the model, this global identity defining the global identity (UUID) of the new version of the model (VER2);
∘ reproducing the data of the components of the previous version of the model as well as their revision data, each reproduced component comprising:
▪ a new local identification (ID) generated upon generating the new version (VER2) of the model;
▪ preserving the global identity (UUID) of the component of the previous version (VER1) of the model;
∘ generating a new local identification (ID) for each component association of the new version of the model;
∘ reproducing all the association data of components of the previous version of the model (VER1).

2. The device according to claim 1, **characterized in that**:
• a model is further defined by a relationship existing or not with a parent model, a child-parent relationship enabling to define:
∘ an inlet port for any modification to bring to a child model;
∘ a base of components of the parent model which are linked to components of the child model, the couple {version; parent-child relationship} enabling running a single version of a single model to be ensured at a given moment,
• the data management system further comprising: a relationship data set enabling, for each model having at least one child model, its family relationship to be associated with said child model and vice versa, an association including an identification;
• generating a new version of a model comprising preserving the parent-child relationship when it exists.

3. The device according to any of claims 1 to 2, **characterized in that** the revision data set:
∘ enables the different modifications of a given component to be classified,
∘ enables the different modifications of a given model to be classified.

4. The device according to any of claims 1 to 3, **characterized in that** the components comprise:
• physical components such as a server, a router, a PC set, network connection links, a geographical site, a building;
• software components such as applications, computer services.

5. The device according to any of claims 1 to 3, **characterized in that** the data management system enables a parent model to be selected and said model to be edited before generating a new version.

6. A device for supervising a network according to any of claims 1 to 5, said device enabling a switching of a new version of a supervision model of an information system to be carried out for producing it, a previous version being active, that is being produced and a new version being applicable, that is ready to be switched but not yet being produced, said model comprising a supervision data set comprising:
• a run data set describing first criticality values of the different components;
• a security data set describing the security rules which are applied to the components of the information system, these rules defining second security values of the different components,
said switching method comprising:
• selecting a version of the supervision model previously created which will have to be switched;
• saving the first and the second criticality and security value sets of the previous version of the active model;
• updating these latest criticality and security values in the components of the new version of the model to be switched so as to ensure a continued operation of the supervision when switching from one version to another;
• defining an identifier of each component of the new version of the model to be switched into production being selected such that it corresponds to the global identifier of the corresponding component of the previous version being produced.

7. The device for supervising according to claim 6, **characterised in that** a monitoring of the generation of the identification of a component enables the uniqueness of said identification to be ensured among the identifications of the network components.

8. The device for supervising a network according to any of claims 1 to 7, said device enabling a duplication of a first supervision model of an information system to be carried out, a model being defined by at least:
• one local identification (ID) defined by the application enabling the model to be defined;
• one global identity (UUID) enabling the model to be discriminated throughout its lifetime;
• one revision (REV) which evolves in particular with the modifications and savings of said model;
• one version (VER) enabling a content of the model and specific supervision rules to be defined,
said model allowing the supervision of a supervision data set including:
• a data set of components describing the different components of the information system, each component comprising:
- a local identification (ID), defined by the application enabling the component to be described;
- a global identity (UUID), enabling said component to be discriminated throughout its lifetime;
- a revision (REV) of the representation of said component;
- a reference (REF) to a model comprising the component,
**characterized in that** said duplication comprises:
• generating a new global identity of a new model;
• reproducing all the data of the first model selected as a start point;
• generating a new global identity of each component reproduced from those defined in the first model;
• saving the supervision data defined in claim 4 of the first model and assigning them again to the components of the new model.

9. The device for supervising a network according to any of claims 1 to 7, said device enabling a generation of a new branch of a first supervision model of an information system to be carried out, said first model being defined by at least:
• one local identification (ID) defined by the application enabling the model to be defined;
• one global identity (UUID) enabling the model to be discriminated throughout its lifetime;
• one revision (REV) which evolves in particular with the modifications and savings of said model;
• one version (VER) enabling a content of the model and specific supervision rules to be defined,
said model allowing the supervision of a supervision data set including:
• a data set of components describing the different components of the information system, each component comprising:
- a local identification (ID), defined by the application enabling the component to be described;
- a global identity (UUID), enabling said component to be discriminated throughout its lifetime;
- a revision (REV) of the representation of said component;
- a reference (REF) to a model comprising the component;
**characterised in that** the generation of a new branch comprises:
• preserving the global identity of the first model;
• reproducing all the data of the first model selected as a start point;
• reproducing the association data of the components;
• generating a new global identity of each component reproduced from those defined in the first model.

10. A system for supervising a management network of an information system, said system comprising a device according to any of claims 1 to 9 connected to a network and the components defining said supervised network.
